# FASCICULE DE BREVET EUROPEEN

(11) **EP 2 660 087 B1**
(45) Date de publication et mention de la délivrance du brevet: **30.09.2015**
(21) Numéro de dépôt: 13166402.1
(22) Date de dépôt: 03.05.2013
(51) Int. Cl.: B60H 1/32

(54) **Procédé de ralentissement de givrage d'un système de conditionnement pour véhicule automobile, et système de conditionnement correspondant**
Verfahren zur Verlangsamung der Vereisung eines Klimaanlagensystems für ein Fahrzeug, und entsprechendes Klimaanlagensystem
Method for slowing the icing of an air-conditioning system for a motor vehicle, and corresponding air-conditioning system

(30) Priorité: 04.05.2012 FR 1201299
(43) Date de publication de la demande: 06.11.2013
(73) Titulaire: VALEO SYSTEMES THERMIQUES, 78320 Le Mesnil Saint-Denis (FR)
(72) Inventeur: Aoun, Bernard, 75013 Paris (FR); Pechdimaljian, Jacques, 78320 Le Mesnil Saint Denis (FR)
(74) Mandataire: Delplanque, Arnaud

(56) Documents cités:
- DE-A1- 3 836 989
- FR-A1- 2 959 005
- FR-A1- 2 963 278
- US-A1- 2005 198 980

## Description

L'invention est du domaine des installations de ventilation, de chauffage et/ou de climatisation d'un véhicule automobile électrique ou hybride.

L'invention a pour objet un procédé de ralentissement de givrage d'un système de conditionnement coopérant avec une telle installation. L'invention a aussi pour objet le système de conditionnement correspondant.

Un véhicule automobile électrique ou hybride, dont la propulsion est assurée au moins partiellement par un moteur électrique, est couramment équipé d'un système de ventilation, de chauffage et/ou de climatisation pour modifier les paramètres aérothermiques de l'air à l'intérieur de l'habitacle du véhicule en délivrant un flux d'air conditionné à l'intérieur de l'habitacle.

Un tel système de conditionnement peut généralement être utilisé par exemple l'été pour un besoin en refroidissement de l'habitacle, mais aussi par exemple l'hiver pour un besoin en chauffage de l'habitacle.

FR 2959005 A1, divulgue un procédé de détection de givre sur un échangeur et un système correspondant.

Selon une solution connue, le système de conditionnement comporte au moins un échangeur thermique apte à travailler en mode condenseur ou en mode évaporateur selon les besoins.

Selon une solution connue, un tel échangeur thermique apte à travailler en mode évaporateur ou condenseur est par exemple agencé au niveau de la face avant du véhicule pour un échange thermique entre le fluide réfrigérant et un flux d'air extérieur au véhicule.

En particulier, pour des besoins de chauffage, une solution connue est d'utiliser le système de conditionnement en mode pompe à chaleur.

Dans ce cas, l'échangeur thermique extérieur travaille en mode évaporateur.

L'inconvénient d'une telle solution lorsqu'elle est mise en oeuvre en conditions hivernales, est le risque de givrage de l'échangeur thermique extérieur travaillant en mode évaporateur du fait de la condensation de la vapeur d'eau dans l'air et de son refroidissement au contact des parois. En particulier, les intercalaires à l'intérieur de l'échangeur thermique peuvent être pris en glace.

Ceci a pour effet de diminuer significativement les échanges thermiques au sein de cet échangeur thermique, et par conséquent la puissance et l'efficacité du système de conditionnement.

On connaît de l'art antérieur, une solution qui consiste à utiliser l'échangeur thermique en mode condenseur. Pour ce faire, le système de conditionnement est communément utilisé en mode climatisation. Ainsi, l'échangeur thermique en mode condenseur est traversé par des gaz chauds ce qui permet le dégivrage.

Toutefois, cette solution provoque un inconfort thermique. Un refroidissement peut donc être ressenti dans l'habitacle du véhicule.

En outre, cette solution ne permet pas non plus de supprimer la rétention d'eau dans les intercalaires, de sorte qu'à chaque utilisation de la boucle en mode pompe à chaleur, le phénomène peut se reproduire plus fréquemment et plus rapidement.

L'invention a donc pour objectif de pallier au moins partiellement ces inconvénients de l'art antérieur en proposant un procédé de ralentissement de givrage amélioré du système de conditionnement.

À cet effet, l'invention a pour objet un procédé de ralentissement de givrage d'un système de conditionnement thermique pour véhicule automobile, le système de conditionnement thermique comprenant un échangeur thermique extérieur apte à être traversé par un flux d'air extérieur audit véhicule pour un échange thermique entre le flux d'air extérieur et un fluide réfrigérant circulant dans l'échangeur thermique extérieur, ledit procédé comprend les étapes suivantes :
- on mesure la température du flux d'air extérieur,
- on compare la température du flux d'air extérieur à un seuil de température,
- si la température du flux d'air extérieur est inférieure ou égale au seuil de température, on mesure le taux d'humidité du flux d'air extérieur, et
- on régule la vitesse du flux d'air extérieur en fonction du taux d'humidité mesuré : si le taux d'humidité du flux d'air extérieur est supérieur à un seuil supérieur d'humidité, on réduit la vitesse du flux d'air extérieur traversant l'échangeur thermique extérieur, et si le taux d'humidité du flux d'air extérieur est inférieur ou égal au seuil supérieur d'humidité, on augmente la vitesse du flux d'air extérieur traversant l'échangeur thermique extérieur.

Ledit procédé peut en outre comporter une ou plusieurs caractéristiques suivantes, prises séparément ou en combinaison :
- ledit procédé comprend une étape préliminaire dans laquelle on détecte des conditions génératrices de givrage de l'échangeur thermique extérieur ;
- la détection de conditions génératrices de givrage comprend les étapes suivantes :
   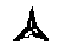 on détermine si la température du fluide réfrigérant est inférieure à la température du flux d'air extérieur mesurée,
   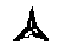 si la température du fluide réfrigérant est inférieure à la température du flux d'air extérieur, on mesure le taux d'humidité du flux d'air extérieur,
   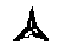 on compare le taux d'humidité du flux d'air extérieur à un seuil inférieur d'humidité inférieur au seuil supérieur d'humidité, et
   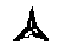 on détermine si le taux d'humidité est supérieur au seuil inférieur d'humidité pour détecter des conditions génératrices de givrage;
- on régule la vitesse du flux d'air extérieur à l'aide d'un ventilateur agencé en amont de l'échangeur thermique extérieur dans le sens d'écoulement du flux d'air extérieur ;
- le système de conditionnement comprend des ouvertures et des volets mobiles entre une position d'ouverture dans laquelle les volets mobiles autorisent le flux d'air extérieur à traverser les ouvertures et une position de fermeture dans laquelle les volets mobiles s'opposent au passage du flux d'air extérieur, et on pilote les volets mobiles pour réguler la vitesse du flux d'air extérieur ;
- le seuil de température est de l'ordre de 0°C;
- le seuil supérieur d'humidité est de l'ordre de 90%, et le seuil inférieur d'humidité est de l'ordre de 60%.

L'invention concerne également un système de conditionnement thermique pour véhicule automobile comprenant un circuit de fluide réfrigérant comprenant un échangeur thermique extérieur entre un flux d'air extérieur et le fluide réfrigérant,
ledit système comprend :
- au moins un moyen de mesure de la température et du taux d'humidité du flux d'air extérieur,
- au moins un moyen de comparaison de la température mesurée du flux d'air extérieur à un seuil de température prédéfini,
- au moins un moyen de comparaison du taux d'humidité mesuré du flux d'air extérieur à un seuil supérieur d'humidité, et
- une unité de régulation de la vitesse du flux d'air extérieur en fonction du taux d'humidité mesuré, configurée pour :
   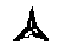 réduire la vitesse du flux d'air extérieur traversant l'échangeur thermique extérieur lorsque la température mesurée du flux d'air extérieur est inférieure ou égale au seuil de température prédéfini et le taux d'humidité du flux d'air extérieur est supérieur au seuil supérieur d'humidité, et
   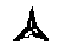 augmenter la vitesse du flux d'air extérieur traversant l'échangeur thermique extérieur lorsque la température mesurée du flux d'air extérieur est inférieure ou égale au seuil de température prédéfini et le taux d'humidité du flux d'air extérieur est inférieur ou égal au seuil supérieur d'humidité.

Ledit système de conditionnement peut en outre comporter une ou plusieurs caractéristiques suivantes, prises séparément ou en combinaison :
- le circuit de fluide réfrigérant comprend en série au moins un compresseur, un échangeur thermique intérieur pour un échange thermique entre le fluide réfrigérant et un flux d'air à destination de l'habitacle, et l'échangeur thermique extérieur ;
- ledit système comprend un moyen de détection de conditions génératrices de givrage comprenant au moins un moyen de traitement pour :
   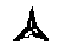 déterminer si la température du fluide réfrigérant est inférieure à la température du flux d'air extérieur,
   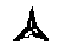 comparer la température du flux d'air extérieur à un seuil de température,
   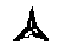 mesurer le taux d'humidité du flux d'air extérieur,
   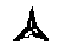 comparer le taux d'humidité du flux d'air extérieur à un seuil inférieur d'humidité inférieur au seuil supérieur d'humidité, et
   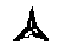 si la température du fluide réfrigérant est inférieure à la température du flux d'air extérieur inférieure au seuil de température et si le taux d'humidité est supérieur au seuil inférieur d'humidité, identifier une détection de conditions génératrices de givrage;
- l'unité de régulation de vitesse comprend:
   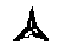 au moins un moyen de traitement pour mesurer la vitesse du flux d'air extérieur et mesurer la vitesse dudit véhicule qui conditionne la vitesse du flux d'air extérieur,
   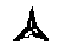 au moins un organe de régulation de vitesse, et
   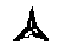 au moins un moyen de commande de l'organe de régulation de vitesse en fonction de la vitesse dudit véhicule et de la vitesse du flux d'air extérieur ;
- l'organe de régulation de vitesse comprend un ventilateur ;
- le ventilateur est agencé en amont de l'échangeur thermique extérieur dans le sens d'écoulement du flux d'air extérieur ;
- le ventilateur est agencé en aval de l'échangeur thermique extérieur dans le sens d'écoulement du flux d'air extérieur ;
- l'organe de régulation de vitesse comprend des volets mobiles entre une position d'ouverture dans laquelle les volets mobiles autorisent le flux d'air extérieur à traverser des ouvertures et une position de fermeture dans laquelle les volets mobiles s'opposent au passage du flux d'air extérieur.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue schématique du système de conditionnement selon l'invention mis en oeuvre selon un mode pompe à chaleur,
- la figure 2 représente de façon schématique un graphe des risques de givrage en fonction des conditions de température et de taux d'humidité de l'air extérieur au véhicule,
- la figure 3 représente un graphe montrant l'évolution de la quantité de givre formé sur des intercalaires d'un échangeur thermique extérieur en fonction du taux d'humidité et de la vitesse du flux d'air extérieur traversant l'échangeur thermique extérieur,
- la figure 4 représente de façon schématique l'évolution de la quantité de givre formé sur des intercalaires d'un échangeur thermique extérieur en fonction de la vitesse du flux d'air extérieur traversant l'échangeur thermique extérieur pour un premier taux d'humidité,
- la figure 5 représente de façon schématique l'évolution de la quantité de givre formé sur des intercalaires d'un échangeur thermique extérieur en fonction de la vitesse du flux d'air extérieur traversant l'échangeur thermique extérieur pour un deuxième taux d'humidité,
- la figure 6 représente de façon schématique l'évolution de la quantité de givre formé sur des intercalaires d'un échangeur thermique extérieur en fonction de la vitesse du flux d'air extérieur traversant l'échangeur thermique extérieur pour un troisième taux d'humidité, et
- la figure 7 représente de façon schématique les étapes d'un procédé de ralentissement de givrage de l'échangeur thermique extérieur.

Dans ces figures, les éléments sensiblement identiques portent les mêmes références.

### Système de conditionnement

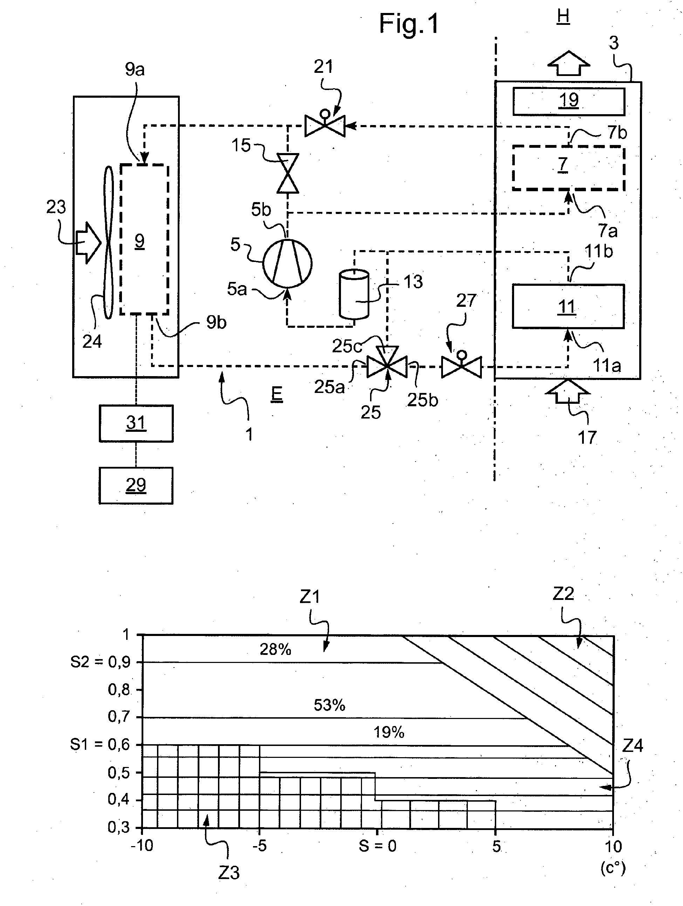

Tel que représenté sur la figure 1, un système de conditionnement comporte un circuit de fluide réfrigérant 1.

Le système de conditionnement comporte en outre une unité de commande (non représentée) pour le pilotage de ce système de conditionnement selon divers modes de fonctionnement, tels qu'un mode pompe à chaleur correspondant à un besoin de chauffage, ou un mode climatisation correspondant à un besoin de refroidissement, ou encore un mode dégivrage.

Le circuit de fluide réfrigérant 1 est une boucle fermée à l'intérieur de laquelle circule un fluide réfrigérant.

Le fluide réfrigérant peut être un fluide réfrigérant sous-critique, comme par exemple un composé fluoré, notamment celui connu sous l'appellation R134A. Le fluide réfrigérant peut alternativement être du dioxyde de carbone, connu sous l'appellation R744A.

Comme représenté dans la figure 1, le circuit de fluide réfrigérant 1 s 'étend entre d'une part l'habitacle du véhicule, repéré par H, et plus particulièrement un boîtier de climatisation 3, et d'autre part l'environnement extérieur à l'habitacle H, repéré par E.

Le boîtier de climatisation 3 est situé généralement dans l'habitacle H derrière la planche de bord.

Selon le mode de réalisation illustré, le circuit de fluide réfrigérant 1 comprend:
- un compresseur 5,
- un échangeur thermique intérieur 7,
- un échangeur thermique extérieur 9, et
- un évaporateur 11.

Le fluide réfrigérant est mis en circulation par le compresseur 5 dont la fonction est d'augmenter la pression et la température du fluide réfrigérant.

Le compresseur 5 comprend un orifice d'entrée 5a par lequel arrive le fluide réfrigérant et un orifice de sortie 5b par lequel le fluide réfrigérant comprimé est évacué.

On peut prévoir un accumulateur 13 agencé en amont du compresseur 5 dans le sens de circulation du fluide réfrigérant dans le circuit de fluide réfrigérant 1. Cet accumulateur 13 empêche une admission de fluide réfrigérant à l'état liquide à l'intérieur du compresseur 5.

En sortie du compresseur 5, le fluide réfrigérant peut circuler vers l'échangeur thermique intérieur 7. Le compresseur 5, plus précisément son orifice de sortie 5b, est relié à une entrée 7a de l'échangeur thermique intérieur 7.

Lorsque le système de conditionnement est piloté en mode pompe à chaleur pour chauffer l'air de l'habitacle, le compresseur 5 est apte à comprimer en l'échauffant le fluide réfrigérant sous forme gazeuse contenu dans le circuit de fluide réfrigérant 1 en provenance de l'échangeur thermique extérieur 9. Le compresseur 5, plus précisément son orifice d'entrée 5a, est relié à une sortie 9b de l'échangeur thermique extérieur 9.

Selon le mode de réalisation décrit, le compresseur 5 est associé à un premier moyen de commutation 15, tel qu'une vanne deux-voies, qui permet au fluide réfrigérant de by-passer l'échangeur thermique intérieur 7 et de circuler vers l'échangeur thermique extérieur 9.

L'orifice de sortie 5b du compresseur 5 est donc également raccordé par une conduite de contournement ou by-pass à une entrée 9a de l'échangeur thermique extérieur 9.

La vanne 15 permet donc au fluide réfrigérant de circuler directement du compresseur 5 vers l'échangeur thermique extérieur 9 sans traverser l'échangeur thermique intérieur 7 pour éviter tout échange de chaleur avec le flux d'air 17 à destination de l'habitacle.

Par ailleurs, l'orifice d'entrée 5a est également relié à un orifice de sortie 11b de l'évaporateur 11.

L'échangeur thermique intérieur 7 est configuré pour permettre un échange de calories entre le fluide réfrigérant et un flux d'air 17 destiné à être envoyé à l'intérieur de l'habitacle H.

L'échangeur thermique intérieur 7 est donc un échangeur air/fluide réfrigérant.

En pratique, l'échangeur thermique intérieur 7 est situé au niveau de l'habitacle H et généralement installé dans le boîtier de climatisation 3 dans lequel circule le flux d'air 17 à destination de l'habitacle envoyé dans l'habitacle du véhicule automobile.

Le flux d'air 17 à destination de l'habitacle H est par exemple un flux d'air frais prélevé à l'extérieur de l'habitacle H, et/ou un flux d'air recyclé prélevé à l'intérieur de l'habitacle du véhicule. Le flux d'air 17 à destination de l'habitacle H peut aussi être un mélange d'air provenant de l'habitacle H et d'air provenant de l'extérieur de l'habitacle. On peut prévoir un moyen de sélection (non représenté), par exemple un volet, pour la sélection de la proportion de flux d'air extérieur et/ou flux d'air recyclé pénétrant dans le boîtier de climatisation 3 pour former le flux d'air 17 à destination de l'habitacle H.

L'échangeur thermique intérieur 7 est apte à travailler en condenseur pour réchauffer l'air de l'habitacle H en cédant les calories ou la chaleur prélevée par le fluide réfrigérant, par exemple au niveau de l'échangeur thermique extérieur 9, au flux d'air 17 traversant l'échangeur thermique intérieur 7. Le fluide réfrigérant libère donc de la chaleur au niveau de l'échangeur thermique intérieur 7 en se condensant.

Par ailleurs, le boîtier de climatisation 3 peut également comprendre un ventilateur (non représenté), pour forcer la circulation du flux d'air 17 dans l'échangeur thermique intérieur 7.

Optionnellement, un radiateur additionnel 19, par exemple un radiateur électrique 19, est installé dans le boîtier de climatisation 3, avantageusement en aval de l'échangeur thermique intérieur 7, selon le sens d'écoulement du flux d'air 17 à destination de l'habitacle H. Le radiateur électrique 19 comprend par exemple des résistances thermiques à coefficient de température positif ou PTC en anglais pour « Positive Temperature Coefficient ».

De plus, le fluide réfrigérant en sortie de l'échangeur thermique intérieur 7 peut circuler vers l'échangeur thermique extérieur 9.

Lorsque le système de conditionnement est piloté en mode pompe à chaleur, l'échangeur thermique intérieur 7 travaille en condenseur et l'échangeur thermique extérieur 9 travaille en évaporateur. À cet effet, on prévoit un premier organe de détente 21 interposé entre la sortie 7b de l'échangeur thermique intérieur 7 et l'entrée 9a de l'échangeur thermique extérieur 9.

Le premier organe de détente 21 permet d'abaisser la pression du fluide réfrigérant avant son entrée dans l'échangeur thermique extérieur 9 travaillant en évaporateur. Ainsi, après condensation dans l'échangeur thermique intérieur 7, le fluide réfrigérant qui est alors sous haute pression se détend ensuite à travers le premier organe de détente 21, avant de passer dans l'échangeur thermique extérieur 9 pour s'évaporer. Le fluide réfrigérant qui arrive au niveau de l'échangeur thermique extérieur 9 est par exemple diphasique, c'est-à-dire qui comprend un mélange des deux phases.

Le boîtier de climatisation 3 loge également l'évaporateur 11, avantageusement disposé en amont de l'échangeur thermique intérieur 7 selon le sens de circulation du flux d'air 17 à destination de l'habitacle H.

En s'évaporant dans l'évaporateur 11, le fluide réfrigérant absorbe la chaleur du flux d'air 17 traversant l'évaporateur 11; ce qui a pour effet de refroidir le flux d'air 17 à destination de l'habitacle H.

Un ventilateur (non représenté) du boîtier de climatisation 3 peut forcer la circulation du flux d'air 17 dans cet évaporateur 11 pour refroidir le flux d'air 17 à destination de l'habitacle H.

Ainsi, le flux d'air 17 à destination de l'habitacle H traverse l'évaporateur 11 et/ou l'échangeur thermique intérieur 7 et/ou le radiateur additionnel 15 selon les besoins de refroidissement ou de chauffage de l'habitacle H.

Comme dit précédemment, le circuit de fluide réfrigérant 1 comprend un échangeur thermique extérieur 9 situé dans l'environnement E externe à l'habitacle H du véhicule.

L'échangeur thermique extérieur 9 est apte à permettre un échange de calories entre le fluide réfrigérant et un flux d'air extérieur 23 destiné à être envoyé à l'extérieur de l'habitacle H du véhicule. Il s'agit donc d'un échangeur thermique air/fluide réfrigérant.

Généralement, l'échangeur thermique extérieur 9 est installé en face avant du véhicule de façon à bénéficier d'un flux d'air dynamique, en tant que flux d'air extérieur 23, quand le véhicule est en mouvement.

À titre d'exemple, l'échangeur thermique extérieur 9 peut comprendre un faisceau de tubes de circulation du fluide réfrigérant empilés, et éventuellement des intercalaires ou ailettes (non visibles sur les figures) interposés entre les tubes de circulation du fluide réfrigérant pour améliorer l'échange thermique entre le flux d'air extérieur 23 et le fluide réfrigérant.

On peut prévoir un ventilateur 24 pour réguler le débit d'air traversant l'échangeur thermique extérieur 9. Ce ventilateur 24 fait par exemple partie d'un groupe moto-ventilateur dans le véhicule.

Le ventilateur 24 est par exemple agencé en amont de l'échangeur thermique extérieur 9 selon le sens d'écoulement du flux d'air extérieur 23.

En variante, le ventilateur 24 est agencé en aval de l'échangeur thermique extérieur 9 selon le sens d'écoulement du flux d'air extérieur 23.

Selon divers modes de fonctionnement du système de conditionnement, l'échangeur thermique extérieur 9 est apte à fonctionner en tant que condenseur ou en tant qu'évaporateur.

En mode évaporateur, l'échangeur thermique extérieur 9 permet de prélever des calories sous forme de la chaleur au flux d'air extérieur 23.

En mode condenseur, le fluide réfrigérant cède de la chaleur au flux d'air extérieur 23 traversant l'échangeur thermique extérieur 9.

Le fluide réfrigérant en sortie de l'échangeur thermique extérieur 9 peut soit circuler vers l'évaporateur 11 soit retourner vers le compresseur 5.

Pour ce faire, on prévoit un deuxième moyen de commutation 25. Il s'agit par exemple d'une vanne « trois-voies » 25.

Cette vanne « trois-voies » 25 comprend un orifice d'entrée 25a relié à la sortie 9b de l'échangeur thermique extérieur 9, un premier orifice de sortie 25b relié à l'évaporateur 11, et un deuxième orifice de sortie 25c relié au compresseur 5.

Cette vanne « trois-voies » 25 permet donc de diriger le fluide réfrigérant soit vers l'évaporateur 11 soit vers le compresseur 5 sans passer par l'évaporateur 11.

Un deuxième organe de détente 27 est également disposé en aval, selon le sens de circulation du fluide réfrigérant, de la vanne « trois-voies » 25. Ce deuxième organe de détente 27 est donc interposé entre l'échangeur thermique extérieur 9 et l'évaporateur 11.

Ainsi, après avoir traversé le deuxième organe de détente 27, le fluide réfrigérant peut pénétrer dans l'évaporateur 11 par l'intermédiaire d'un orifice d'entrée 11a.

Par ailleurs, afin de réduire le risque de givrage dû à l'utilisation de l'échangeur thermique extérieur 9 en mode évaporateur en conditions hivernales, le système de conditionnement comprend en outre :
- des moyens de détection 29 de conditions génératrices de givrage de l'échangeur thermique extérieur 9, et
- une unité de régulation 31 de la vitesse du flux d'air extérieur 23.

On entend par « conditions génératrices de givrage » des conditions de température et d'humidité du flux d'air extérieur 23, et des conditions de température du fluide réfrigérant dans l'échangeur thermique extérieur 9, favorisant l'apparition de givre notamment sur les intercalaires de l'échangeur thermique extérieur 9.

En effet, lorsque l'échangeur thermique 9 extérieur a une température inférieure à celle de l'air extérieur, voire négative, l'humidité de l'air extérieur se condense et gèle sur cet échangeur thermique extérieur 9. En particulier, les intercalaires (non représentés) à l'intérieur de l'échangeur thermique extérieur 9 peuvent être pris en glace.

Ceci est notamment le cas lorsque l'échangeur thermique extérieur 9 est utilisé en mode évaporateur lorsque le système de conditionnement est piloté en pompe à chaleur.

La figure 2 est un graphe illustrant les probabilités de givrage pour des conditions hivernales en moyenne en Europe, avec en abscisse la température du flux d'air extérieur 23 allant de -10°C à 10°C et en ordonnée le taux d'humidité relative de ce flux d'air extérieur 23 allant de 0,3 à 1.

En référence à la figure 2, on a représenté de façon schématique:
- par la zone blanche Z1 non hachurée, les conditions génératrices de givrage,
- par la zone hachurée en diagonale Z2, les conditions dans lesquelles il n'y a pas de givre,
- par la zone quadrillée Z3, les conditions climatiques peu probables en moyenne en Europe, et
- par la zone hachurée horizontalement Z4, les conditions pour lesquelles il y a peu de risque de givrage.

Ainsi, à titre d'exemple, on a constaté un risque de givrage pour un taux d'humidité supérieur à un seuil inférieur d'humidité S1 par exemple ici de 0,6.

Il a été observé que :
- la majorité du givrage, à savoir 53%, se produit pour un taux d'humidité compris entre 0,7 et 0,9,
- 28% du givrage se produit pour un taux d'humidité au-dessus de 0,9, et
- 19% du givrage se produit pour un taux d'humidité entre 0,6 et 0,7.

Ainsi, les moyens de détection 29 de conditions génératrices de givrage peuvent comprendre au moins un moyen de mesure de température de l'air extérieur et au moins un moyen de mesure du taux d'humidité de cet air extérieur. On peut envisager des capteurs agencés au niveau de la face avant du véhicule, ou encore au niveau des rétroviseurs.

Les moyens de détection 29 comprennent de plus au moins un moyen de traitement pour :
- déterminer si la température du fluide réfrigérant est inférieure à la température du flux d'air extérieur 23,
- comparer la température du flux d'air extérieur 23 à un seuil de température S,
- mesurer le taux d'humidité du flux d'air extérieur 23,
- comparer le taux d'humidité du flux d'air extérieur 23 au seuil inférieur d'humidité inférieur S1, et
- si la température du fluide réfrigérant est inférieure à la température du flux d'air extérieur 23 inférieure au seuil de température S et si le taux d'humidité est supérieur au seuil inférieur d'humidité S1, identifier une détection de conditions génératrices de givrage.

On pourrait également envisager de mesurer la température du fluide réfrigérant.

Par ailleurs, en se référant à nouveau à la figure 1, les moyens de détection 29 sont aptes à transmettre à l'unité de régulation 31 des informations relatives aux températures mesurées et aux taux d'humidité mesurés.

L'unité de régulation 31 comprend donc au moins un moyen pour recevoir les informations relatives aux températures mesurées et aux taux d'humidité mesurés transmis par les moyens de détection 29.

L'unité de régulation 31 peut éventuellement recevoir des informations de températures ou de taux d'humidité transmises par d'autres moyens de traitement du véhicule.

De plus, l'unité de régulation 31 comprend au moins un moyen de détermination de la vitesse du flux d'air extérieur 23 traversant l'échangeur thermique extérieur 9.

À cet effet, l'unité de régulation 31 est apte à recevoir au moins une information de vitesse du véhicule qui conditionne la vitesse du flux d'air extérieur 23 traversant l'échangeur thermique extérieur 9. Cette information de vitesse du véhicule est par exemple transmise par un capteur de vitesse sur le véhicule pour mesurer la vitesse réelle du véhicule ou un système d'assistance à la conduite et/ou de navigation tel qu'un GPS pour "Global Positioning System" en anglais.

L'unité de régulation 31 comprend en outre au moins un moyen de traitement pour déterminer une vitesse du flux d'air adéquate en fonction des informations de températures et d'humidité transmises permettant de réduire la quantité de givre.

En particulier, l'unité de régulation 31 permet d'augmenter ou de réduire la vitesse du flux d'air extérieur 23 traversant l'échangeur thermique extérieur 9 selon les conditions de température et d'humidité tel que détaillé par la suite.

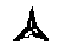 **Température supérieure à un seuil de température S prédéfini**

En effet, pour une température de l'air extérieur supérieure à un seuil de température S prédéfini (cf figure 2), l'augmentation de la vitesse du flux d'air extérieur 23 traversant l'échangeur thermique extérieur 9, permet d'augmenter la température par exemple des intercalaires (non représentés) à l'intérieur de l'échangeur thermique extérieur 9, et permet de diminuer la quantité de givre formé.

Ce seuil de température S prédéfini est par exemple de l'ordre de 0°C.

Ce seuil de température S a été défini de façon expérimentale.

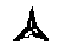 **Température inférieure ou égale au seuil de température S prédéfini**

En revanche, pour une température inférieure ou égale à ce seuil de température S prédéfini, la vitesse du flux d'air extérieur 23 agit différemment sur la quantité de givre formé selon le taux d'humidité.

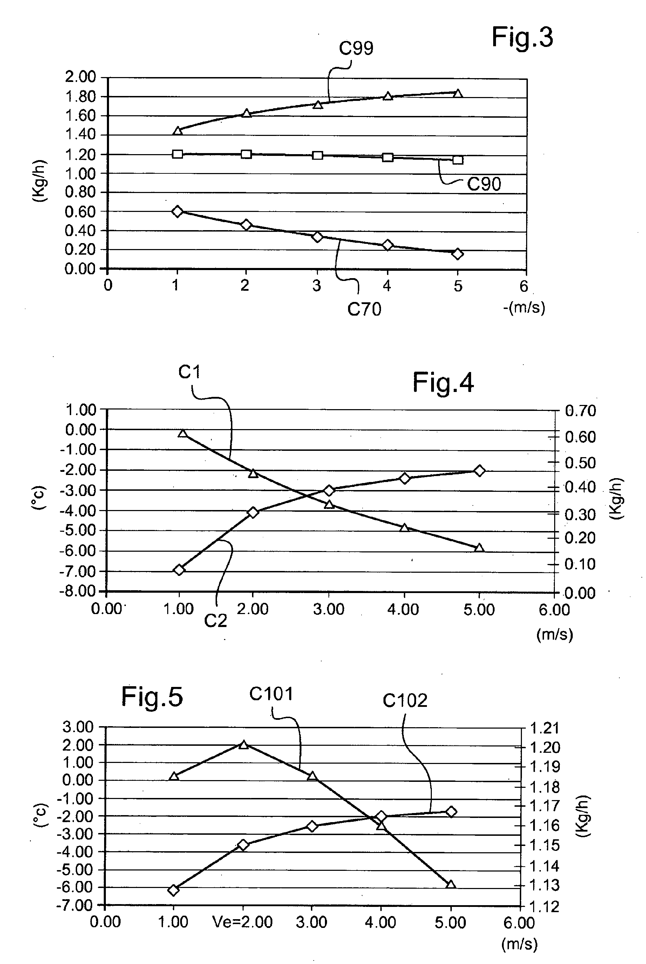

Ceci est illustré sur la figure 3, montrant un graphe expérimental pour une température donnée de l'air extérieur représentant l'évolution de la quantité de givre en fonction du taux d'humidité et de la vitesse du flux d'air extérieur 23.

Les résultats montrés sur cette figure 3 correspondent à une température de l'air extérieur de l'ordre de 0°C, donc égale au seuil S de température selon l'exemple décrit.

Ce graphe présente en abscisse la vitesse du flux d'air extérieur 23 en m/s et en ordonnée la quantité de givre en Kg/h.

La première courbe C70 représente l'évolution de la quantité de givre en fonction de la vitesse du flux d'air extérieur 23 pour un taux d'humidité de 70%. Pour faciliter la lecture du graphe cette première courbe C70 est différenciée à l'aide de losanges.

La deuxième courbe C90 représente l'évolution de la quantité de givre en fonction de la vitesse du flux d'air extérieur 23 pour un taux d'humidité de 90%. Pour faciliter la lecture du graphe cette deuxième courbe C90 est différenciée à l'aide de carrés.

Et, la troisième courbe C99 représente l'évolution de la quantité de givre en fonction de la vitesse du flux d'air extérieur 23 pour un taux d'humidité de 99%. Pour faciliter la lecture du graphe cette troisième courbe C99 est différenciée à l'aide de triangles.

On constate donc que pour une température de 0°C avec un taux d'humidité de 70%, la quantité de givre décroît avec l'augmentation de la vitesse du flux d'air extérieur 23 traversant l'échangeur thermique extérieur 9.

Pour une température de 0°C avec un taux d'humidité de 90%, la quantité de givre augmente très légèrement avant de décroître avec l'augmentation de la vitesse du flux d'air extérieur 23 traversant l'échangeur thermique extérieur 9.

Au contraire, pour une température de 0°C avec un taux d'humidité de 99%, la quantité de givre croît avec l'augmentation de la vitesse du flux d'air extérieur 23 traversant l'échangeur thermique extérieur 9.

Ainsi, pour une température inférieure ou égale au seuil de température S prédéfini, par exemple de 0°C, la quantité de givre décroît pour un taux d'humidité inférieur à un seuil supérieur d'humidité S2 (cf figure 2), mais augmente pour un taux d'humidité supérieur à ce seuil supérieur d'humidité S2.

Le seuil supérieur d'humidité S2 est supérieur au seuil inférieur d'humidité S1 permettant de détecter des conditions génératrices de givrage, à titre d'exemple de 60%.

Selon le mode de réalisation décrit, le seuil supérieur d'humidité S2 est de l'ordre de 90%.

Ce seuil supérieur d'humidité S2 est choisi de l'ordre du taux d'humidité pour lequel on observe à une vitesse d'équilibre prédéfinie Ve, un équilibre entre les phénomènes d'augmentation de la température des intercalaires (non représentés) à l'intérieur de l'échangeur thermique extérieur 9 et d'augmentation de la quantité d'eau véhiculée par le flux d'air. Ceci sera détaillé par la suite.

### - Taux d'humidité inférieur au seuil supérieur d'humidité S2

En effet, pour un taux d'humidité inférieur au seuil supérieur d'humidité S2 (figure 2), en augmentant la vitesse du flux d'air extérieur 23 traversant l'échangeur thermique extérieur 9, on augmente la température des intercalaires (non visibles) à l'intérieur de l'échangeur thermique extérieur 9 et on réduit la quantité de givre formé.

Ceci est représenté de façon schématique sur la figure 4 lorsque le taux d'humidité est inférieur au seuil supérieur d'humidité S2.

Les résultats montrés sur la figure 4 correspondent à une température de l'air extérieur de l'ordre de 0°C avec un taux d'humidité de l'ordre de 70%.

Ce taux d'humidité de 70% est compris entre le seuil inférieur d'humidité S1 de 60% et le seuil supérieur d'humidité S2 de 90%.

Ce graphe présente en abscisse la vitesse du flux d'air extérieur 23 en m/s et en ordonnée d'une part (à gauche de la figure 4) la température des intercalaires à l'intérieur de l'échangeur thermique extérieur 9, et d'autre part (à droite de la figure 4) la quantité de givre formé en Kg/h.

La première courbe C1 représente l'évolution de la quantité de givre en fonction de la vitesse du flux d'air extérieur 23. Pour faciliter la lecture du graphe cette première courbe C1 est différenciée à l'aide de triangles.

La deuxième courbe C2 représente l'évolution de la température des intercalaires (non représentés) à l'intérieur de l'échangeur thermique extérieur 9 en fonction de la vitesse du flux d'air extérieur 23. Pour faciliter la lecture du graphe cette deuxième courbe C2 est différenciée à l'aide de losanges.

La quantité de givre représentée par la courbe C1 décroît pendant que la température des intercalaires représentée par la courbe C2 croît avec l'augmentation de la vitesse du flux d'air 23.

L'unité de régulation 31 doit donc augmenter la vitesse du flux d'air 23 lorsque la température de l'air extérieur est inférieure ou égale au seuil de température S prédéfini, par exemple de 0°C, et que le taux d'humidité est inférieur au seuil supérieur d'humidité par exemple de 90%.

### - Taux d'humidité égal au seuil supérieur d'humidité S2

De plus, la figure 5, illustre le cas où le taux d'humidité est égal au seuil supérieur d'humidité S2.

Les résultats montrés sur la figure 5 correspondent à une température de l'air extérieur de l'ordre de 0°C avec un taux d'humidité de l'ordre de 90%.

De façon similaire à la figure 4, le graphe de la figure 5 présente en abscisse la vitesse du flux d'air extérieur 23 en m/s et en ordonnée d'une part la température des intercalaires à l'intérieur de l'échangeur thermique extérieur 9 en °C, et d'autre part la quantité de givre formé en Kg/h.

La première courbe C101 différenciée à l'aide de triangles représente l'évolution de la quantité de givre en fonction de la vitesse du flux d'air extérieur 23 pour une température de l'air extérieur à 0°C avec un taux d'humidité de 90%.

La deuxième courbe C102, différenciée à l'aide de losanges, représente l'évolution de la température des intercalaires (non représentés) à l'intérieur de l'échangeur thermique extérieur 9 en fonction de la vitesse du flux d'air extérieur 23 pour une température de l'air extérieur à 0°C avec un taux d'humidité de 90%.

En augmentant la vitesse du flux d'air extérieur 23 traversant l'échangeur thermique extérieur 9, on augmente la température des intercalaires (non visibles) à l'intérieur de l'échangeur thermique extérieur 9.

En ce qui concerne la quantité de givre, on constate qu'elle augmente jusqu'à atteindre un maximum pour une vitesse prédéfinie, avant de diminuer avec l'augmentation de la vitesse du flux d'air extérieur 23.

En effet, on constate un phénomène d'équilibre pour une vitesse d'équilibre Ve du flux d'air extérieur 23 par exemple de l'ordre de 2m/s.

Ainsi, lorsque la température de l'air extérieur est inférieure ou égale au seuil de température S prédéfini, par exemple de 0°C, et que le taux d'humidité est égal au seuil supérieur d'humidité par exemple de 90%, l'unité de régulation 31 doit augmenter la vitesse du flux d'air extérieur 23 de façon à dépasser la vitesse d'équilibre Ve pour laquelle un équilibre est observé entre les phénomènes d'augmentation de la température des intercalaires (non représentés) et d'augmentation de la quantité de givre.

### - Taux d'humidité supérieur au seuil supérieur d'humidité S2

En revanche, pour un taux d'humidité supérieur au seuil supérieur d'humidité S2, en augmentant la vitesse du flux d'air extérieur 23 traversant l'échangeur thermique extérieur 9, on augmente la température des intercalaires (non visibles) à l'intérieur de l'échangeur thermique extérieur 9 mais la quantité de givre formé augmente également.

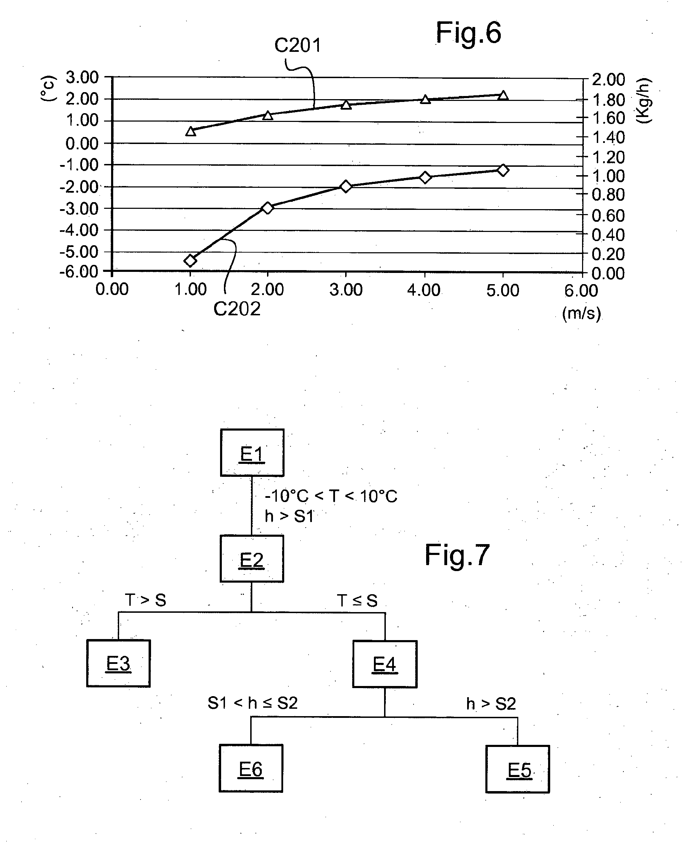

Ceci est représenté de façon schématique sur la figure 6.

Les résultats montrés sur cette figure 6 correspondent à une température de l'air extérieur de l'ordre de 0°C avec un taux d'humidité de l'ordre de 99%.

Selon l'exemple décrit, ce taux d'humidité de 99% est supérieur au seuil supérieur d'humidité S2, ici de 90%.

Ce graphe présente en abscisse la vitesse du flux d'air extérieur 23 en m/s et en ordonnée d'une part (à gauche de la figure 6) la température des intercalaires à l'intérieur de l'échangeur thermique extérieur 9 en °C, et d'autre part (à droite de la figure 6) la quantité de givre formé en Kg/h.

La première courbe C201 différenciée à l'aide de triangles, représente l'évolution de la quantité de givre en fonction de la vitesse du flux d'air extérieur 23.

La deuxième courbe C202, différenciée à l'aide de losanges, représente l'évolution de la température des intercalaires (non représentés) à l'intérieur de l'échangeur thermique extérieur 9 en fonction de la vitesse du flux d'air extérieur 23.

Bien que la température des intercalaires représentée par la courbe C202 croît avec l'augmentation de la vitesse du flux d'air 23, la quantité de givre représentée par la courbe C201 croît également avec la vitesse du flux d'air 23.

L'unité de régulation 31 doit donc réduire la vitesse du flux d'air 23 lorsque la température de l'air extérieur est inférieure ou égale au seuil de température S prédéfini, par exemple de 0°C, et que le taux d'humidité est supérieur au seuil supérieur d'humidité par exemple de 90%.

Par ailleurs, afin de réguler la vitesse du flux d'air extérieur 23, l'unité de régulation 31 peut comprendre au moins un moyen de commande d'au moins un organe de régulation de vitesse.

À titre d'exemple, l'organe de régulation peut être le ventilateur 24 agencé en amont de l'échangeur thermique extérieur 9.

En variante ou en complément, on peut prévoir une pluralité d'ouvertures au niveau de la face avant par exemple agencés en amont de l'échangeur thermique extérieur 9 selon le sens d'écoulement du flux d'air extérieur 23.

Une pluralité de volets (non représentés sur les figures) formant organes de régulation, peuvent être agencés au niveau de ces ouvertures et peuvent être montés mobiles entre une position d'ouverture maximale dans laquelle le flux d'air extérieur 23 peut passer à travers les ouvertures et une position de fermeture maximale dans laquelle les volets s'opposent au passage du flux d'air.

L'unité de régulation 31 peut comprendre au moins un moyen de commande pour piloter l'ouverture ou la fermeture de ces volets. Bien entendu, les volets peuvent être pilotés dans une ou plusieurs positions intermédiaires selon la modification de la vitesse du flux d'air extérieur 23 à commander. À titre d'exemple, on peut commander une ouverture des volets pour augmenter la vitesse du flux d'air extérieur 23 et une fermeture des volets pour réduire la vitesse du flux d'air extérieur 23.

En fonction des conditions de température et du taux d'humidité du flux d'air extérieur 23, l'unité de régulation 31 peut alors commander l'ouverture des volets sur la base de la consigne d'une vitesse du flux d'air extérieur 23 à atteindre et de la vitesse du véhicule qui conditionne la vitesse du flux d'air extérieur 23 traversant l'échangeur thermique extérieur 9.

Ainsi, l'unité de régulation 31 peut réguler la vitesse du flux d'air extérieur 23 en pilotant le ventilateur 24 agencé en amont de l'échangeur thermique extérieur et/ou la position des volets dans toute position intermédiaire entre la position d'ouverture maximale et la position de fermeture maximale.

En outre, le ventilateur 24 peut par exemple être configuré pour atteindre une vitesse prédéterminée. À titre d'exemple, le ventilateur 24 peut être configuré pour une vitesse maximale de 3m/s.

Lorsque la consigne de vitesse du flux d'air extérieur 23 est supérieure à la vitesse maximale du ventilateur, il est intéressant de piloter en plus les volets mobiles pour augmenter le débit du flux d'air traversant l'échangeur thermique extérieur 9.

En particulier, lorsque la consigne de vitesse du flux d'air extérieur 23 doit dépasser la vitesse d'équilibre Ve pour laquelle le phénomène d'équilibre est observé, l'unité de régulation 31 peut piloter en plus du ventilateur 24 l'ouverture des volets pour augmenter d'autant plus la vitesse du flux d'air extérieur et dépasser cette vitesse d'équilibre Ve.

Bien entendu, on peut envisager d'autres organes de régulation permettant de moduler la vitesse du flux d'air extérieur 23 traversant l'échangeur thermique extérieur 9.

### Procédé de ralentissement de givrage

En référence à la figure 7, on décrit maintenant un procédé de ralentissement de givrage de l'échangeur thermique extérieur 9.

On peut prévoir une étape préliminaire E1 dans laquelle on détecte des conditions génératrices de givrage.

Une première condition génératrice de givrage est une température du fluide réfrigérant circulant dans l'échangeur thermique extérieur 9 inférieure à la température du flux d'air extérieur 23. Ceci est notamment le cas en conditions hivernales lorsqu'on utilise l'échangeur thermique extérieur 9 en mode évaporateur pour un pilotage du système de conditionnement en pompe à chaleur.

À cet effet, on peut prévoir de mesurer la température T du flux d'air extérieur 23 traversant l'échangeur thermique extérieur 9. En particulier, on détermine si la température mesurée T est comprise entre -10°C et 10°C.

On peut également mesurer le taux d'humidité h de ce flux d'air extérieur 23, et déterminer si le taux d'humidité h est supérieur à un seuil inférieur d'humidité S1. Ce seuil inférieur d'humidité S1 est par exemple de l'ordre de 60%.

Si oui, des conditions génératrices de givrage sont donc détectées.

Afin d'affiner la détection, on peut déterminer si on se retrouve dans la zone blanche Z1 non hachurée des conditions génératrices de givrage illustrée sur la figure 2.

En cas de détection de conditions génératrices de givrage, on déclenche le procédé de ralentissement de givrage par régulation de la vitesse du flux d'air extérieur 23.

Pour ce faire, lors d'une étape E2, on mesure la température T du flux d'air extérieur 23 si on ne l'a pas encore mesuré et on compare la température T du flux d'air extérieur 23 mesurée à un seuil de température S. Comme dit précédemment ce seuil de température est par exemple 0°C.

Si la température T du flux d'air extérieur 23 est supérieure au seuil de température S, lors d'une étape E3, on augmente la vitesse du flux d'air extérieur 23. Comme expliqué précédemment, l'unité de régulation 31 (cf figure 1) peut pour cela commander au moins un organe de régulation tel que le ventilateur 24 et/ou les volets mobiles, en prenant en compte la vitesse du véhicule.

En revanche, si la température T du flux d'air extérieur 23 est inférieure ou égale au seuil de température S, il faut mesurer le taux d'humidité afin de déterminer s'il faut augmenter ou réduire la vitesse du flux d'air extérieur 23.

À cet effet, on mesure le taux d'humidité h du flux d'air extérieur 23 à l'étape E4.

Si le taux d'humidité h du flux d'air extérieur 23 est supérieur au seuil supérieur d'humidité S2, lors d'une étape E5, on réduit la vitesse du flux d'air extérieur 23 traversant l'échangeur thermique extérieur 9. L'unité de régulation 31 peut piloter cette réduction de vitesse par exemple via le ventilateur 24 et/ou les volets mobiles, en prenant en compte la vitesse du véhicule.

Si le taux d'humidité h du flux d'air extérieur 23 est inférieur ou égal au seuil supérieur d'humidité S2, dans la mesure où des conditions génératrices de givrage ont été détecté le taux d'humidité h est dans ce cas également supérieur au seuil inférieur d'humidité S1.

Lors d'une étape E6, on augmente la vitesse du flux d'air extérieur 23 traversant l'échangeur thermique extérieur 9. L'unité de régulation 31 peut piloter cette augmentation de vitesse par exemple via le ventilateur 24 et/ou les volets mobiles, en prenant en compte la vitesse du véhicule.

En particulier, lorsque le taux d'humidité h est égal au seuil supérieur d'humidité S2, la consigne de la vitesse du flux d'air extérieur 23 à atteindre doit être supérieure à la vitesse d'équilibre Ve comme expliqué précédemment.

On comprend donc qu'un tel procédé de ralentissement de givrage en régulant la vitesse du flux d'air extérieur 23 traversant l'échangeur thermique extérieur 9 en fonction du taux d'humidité du flux d'air extérieur 23 permet d'obtenir une réduction de la quantité de givre par exemple sur les intercalaires à l'intérieur de l'échangeur thermique extérieur 9 sans générer d'inconfort thermique dans l'habitacle.

En effet, la régulation de la vitesse du flux d'air extérieur 23 permet d'éviter de piloter le système de conditionnement en mode climatisation dans lequel l'échangeur thermique externe travaille en condenseur, ce qui crée un refroidissement de l'habitacle H du véhicule.

## Revendications

1. Procédé de ralentissement de givrage d'un système de conditionnement thermique pour véhicule automobile, le système de conditionnement thermique comprenant un échangeur thermique extérieur (9) apte à être traversé par un flux d'air extérieur (23) audit véhicule pour un échange thermique entre le flux d'air extérieur (23) et un fluide réfrigérant circulant dans l'échangeur thermique extérieur (9), et
- on mesure la température (T) du flux d'air extérieur (23),
- on compare la température (T) du flux d'air extérieur (23) à un seuil de température (S), et
**caractérisé en ce que** ledit procédé comprend les étapes suivantes:
- si la température (T) du flux d'air extérieur (23) est inférieure ou égale au seuil de température (S), on mesure le taux d'humidité (h) du flux d'air extérieur (23), et
- on régule la vitesse du flux d'air extérieur (23) en fonction du taux d'humidité (h) mesuré :
• si le taux d'humidité (h) du flux d'air extérieur (23) est supérieur à un seuil supérieur d'humidité (S2), on réduit la vitesse du flux d'air extérieur (23) traversant l'échangeur thermique extérieur (9), et
• si le taux d'humidité (h) du flux d'air extérieur (23) est inférieur ou égal au seuil supérieur d'humidité (S2), on augmente la vitesse du flux d'air extérieur (23) traversant l'échangeur thermique extérieur (9).

2. Procédé selon la revendication 1, comprenant une étape préliminaire dans laquelle on détecte des conditions génératrices de givrage de l'échangeur thermique extérieur (9).

3. Procédé selon la revendication 2, dans lequel la détection de conditions génératrices de givrage comprend les étapes suivantes :
- on détermine si la température du fluide réfrigérant est inférieure à la température (T) du flux d'air extérieur (23) mesurée,
- si la température du fluide réfrigérant est inférieure à la température (T) du flux d'air extérieur (23), on mesure le taux d'humidité (h) du flux d'air extérieur (23),
- on compare le taux d'humidité (h) du flux d'air extérieur (23) à un seuil inférieur d'humidité (S1) inférieur au seuil supérieur d'humidité (S2), et
- on détermine si le taux d'humidité (h) est supérieur au seuil inférieur d'humidité (S1) pour détecter des conditions génératrices de givrage.

4. Procédé selon l'une quelconque des revendications précédentes, dans lequel on régule la vitesse du flux d'air extérieur (23) à l'aide d'un ventilateur (24)).

5. Procédé selon l'une quelconque des revendications précédentes, dans lequel le système de conditionnement comprend des ouvertures et des volets mobiles entre une position d'ouverture dans laquelle les volets mobiles autorisent le flux d'air extérieur (23) à traverser les ouvertures et une position de fermeture dans laquelle les volets mobiles s'opposent au passage du flux d'air extérieur (23), **caractérisé en ce qu'**on pilote les volets mobiles pour réguler la vitesse du flux d'air extérieur (23).

6. Procédé selon l'une quelconque des revendications précédentes, dans lequel le seuil de température (S) est de l'ordre de 0°C.

7. Procédé selon l'une quelconque des revendications précédentes, dans lequel le seuil supérieur d'humidité (S2) est de l'ordre de 90%.

8. Procédé selon l'une quelconque des revendications précédentes, dans lequel le seuil inférieur d'humidité (S1) est de l'ordre de 60%.

9. Système de conditionnement thermique pour véhicule automobile comprenant un circuit de fluide réfrigérant (1) comprenant un échangeur thermique extérieur (9) entre un flux d'air extérieur (23) et le fluide réfrigérant, et
- au moins un moyen de mesure de la température (T) du flux d'air extérieur (23),
- au moins un moyen de comparaison de la température (T) mesurée du flux d'air extérieur (23) à un seuil de température prédéfini (S),**caractérisé en ce que** ledit système comprend :
- au moins un moyen de mesure du taux d'humidité (4) du flux d'air extérieur (23),
- au moins un moyen de comparaison du taux d'humidité (h) mesuré du flux d'air extérieur (23) à un seuil supérieur d'humidité (S2), et
- une unité de régulation (31) de la vitesse du flux d'air extérieur (23) en fonction du taux d'humidité mesuré, configurée pour :
• réduire la vitesse du flux d'air extérieur (23) traversant l'échangeur thermique extérieur (9) lorsque la température (T) mesurée du flux d'air extérieur (23) est inférieure ou égale au seuil de température prédéfini (S) et le taux d'humidité (h) du flux d'air extérieur (23) est supérieur au seuil supérieur d'humidité (S2), et
• augmenter la vitesse du flux d'air extérieur (23) traversant l'échangeur thermique extérieur (9) lorsque la température mesurée (T) du flux d'air extérieur (23) est inférieure ou égale au seuil de température prédéfini (S) et le taux d'humidité (h) du flux d'air extérieur (23) est inférieur ou égal au seuil supérieur d'humidité (S2).

10. Système selon la revendication 9, dans lequel le circuit de fluide réfrigérant (1) comprend en série au moins un compresseur, un échangeur thermique intérieur (7) pour un échange thermique entre le fluide réfrigérant et un flux d'air (17) à destination de l'habitacle, et l'échangeur thermique extérieur (9).

11. Système selon l'une des revendications 9 ou 10, comprenant un moyen de détection (29) de conditions génératrices de givrage comprenant au moins un moyen de traitement pour :
- déterminer si la température du fluide réfrigérant est inférieure à la température du flux d'air extérieur (23),
- comparer la température du flux d'air extérieur (23) à un seuil de température (S),
- mesurer le taux d'humidité du flux d'air extérieur,
- comparer le taux d'humidité du flux d'air extérieur à un seuil inférieur d'humidité inférieur au seuil supérieur d'humidité, et
- si la température du fluide réfrigérant est inférieure à la température du flux d'air extérieur (23) inférieure au seuil de température (S) et si le taux d'humidité est supérieur au seuil inférieur d'humidité, identifier une détection de conditions génératrices de givrage.

12. Système selon l'une quelconque des revendications 9 à 11, dans lequel l'unité de régulation (31) de vitesse comprend :
- au moins un moyen de traitement pour mesurer la vitesse du flux d'air extérieur (23) et mesurer la vitesse dudit véhicule qui conditionne la vitesse du flux d'air extérieur (23),
- au moins un organe de régulation de vitesse (24), et
- au moins un moyen de commande de l'organe de régulation (24) de vitesse en fonction de la vitesse dudit véhicule et de la vitesse du flux d'air extérieur (23).

13. Système selon la revendication 12, dans lequel l'organe de régulation de vitesse comprend un ventilateur (24) agencé en amont de l'échangeur thermique extérieur (9) dans le sens d'écoulement du flux d'air extérieur (23).

14. Système selon l'une des revendications 12 ou 13, dans lequel l'organe de régulation de vitesse comprend des volets mobiles entre une position d'ouverture dans laquelle les volets mobiles autorisent le flux d'air extérieur à traverser des ouvertures et une position de fermeture dans laquelle les volets mobiles s'opposent au passage du flux d'air extérieur (23).

## Patentansprüche

1. Verfahren zur Verlangsamung der Vereisung eines Klimatisierungssystems für ein Kraftfahrzeug, wobei das Klimatisierungssystem einen externen Wärmetauscher (9) enthält, der von einem Luftstrom (23) von außerhalb des Fahrzeugs für einen Wärmeaustausch zwischen dem Außenluftstrom (23) und einem im externen Wärmetauscher (9) zirkulierenden Kühlfluid durchquert werden kann, und die Temperatur (T) des Außenluftstroms (23) gemessen wird, die Temperatur (T) des Außenluftstroms (23) mit einer Temperaturschwelle (S) verglichen wird, und
**dadurch gekennzeichnet, dass** das Verfahren die folgenden Schritte enthält:
- wenn die Temperatur (T) des Außenluftstroms (23) niedriger als die oder gleich der Temperaturschwelle (S) ist, wird der Feuchtigkeitsgehalt (h) des Außenluftstroms (23) gemessen, und
- die Geschwindigkeit des Außenluftstroms (23) wird abhängig vom gemessenen Feuchtigkeitsgehalt (h) geregelt:
• wenn der Feuchtigkeitsgehalt (h) des Außenluftstroms (23) höher als eine obere Feuchtigkeitsschwelle (S2) ist, wird die Geschwindigkeit des den externen Wärmetauscher (9) durchquerenden Außenluftstroms (23) verringert, und
• wenn der Feuchtigkeitsgehalt (h) des Außenluftstroms (23) niedriger als die oder gleich der oberen Feuchtigkeitsschwelle (S2) ist, wird die Geschwindigkeit des den externen Wärmetauscher (9) durchquerenden Außenluftstroms (23) erhöht.

2. Verfahren nach Anspruch 1, das einen vorbereitenden Schritt enthält, während dessen eine Vereisung des externen Wärmetauschers (9) verursachende Bedingungen erfasst werden.

3. Verfahren nach Anspruch 2, wobei die Erfassung von eine Vereisung verursachenden Bedingungen die folgenden Schritte enthält:
- es wird ermittelt, ob die Temperatur des Kühlfluids niedriger ist als die gemessene Temperatur (T) des Außenluftstroms (23),
- wenn die Temperatur des Kühlfluids niedriger ist als die Temperatur (T) des Außenluftstroms (23), wird der Feuchtigkeitsgehalt (h) des Außenluftstroms (23) gemessen,
- der Feuchtigkeitsgehalt (h) des Außenluftstroms (23) wird mit einer unteren Feuchtigkeitsschwelle (S1) verglichen, die niedriger ist als die obere Feuchtigkeitsschwelle (S2), und
- es wird ermittelt, ob der Feuchtigkeitsgehalt (h) höher ist als die untere Feuchtigkeitsschwelle (S1), um eine Vereisung verursachende Bedingungen zu erfassen.

4. Verfahren nach einem der vorhergehenden Ansprüche, wobei die Geschwindigkeit des Außenluftstroms (23) mit Hilfe eines Ventilators (24) geregelt wird.

5. Verfahren nach einem der vorhergehenden Ansprüche, wobei das Klimatisierungssystem Öffnungen und Klappen enthält, die zwischen einer Öffnungsstellung, in der die beweglichen Klappen es dem Außenluftstrom (23) erlauben, die Öffnungen zu durchqueren, und einer Schließstellung beweglich sind, in der die beweglichen Klappen dem Durchgang des Außenluftstroms (23) entgegenwirken, **dadurch gekennzeichnet, dass** die beweglichen Klappen gesteuert werden, um die Geschwindigkeit des Außenluftstroms (23) zu regeln.

6. Verfahren nach einem der vorhergehenden Ansprüche, wobei die Temperaturschwelle (S) in der Größenordnung von 0°C liegt.

7. Verfahren nach einem der vorhergehenden Ansprüche, wobei die obere Feuchtigkeitsschwelle (S2) in der Größenordnung von 90% liegt.

8. Verfahren nach einem der vorhergehenden Ansprüche, wobei die unter Feuchtigkeitsschwelle (S1) in der Größenordnung von 60% liegt.

9. Klimatisierungssystem für ein Kraftfahrzeug, das einen Kühlfluidkreislauf (1), der einen externen Wärmetauscher (9) zwischen einem Außenluftstrom (23) und dem Kühlfluid und mindestens eine Einrichtung zur Messung der Temperatur (T) des Außenluftstroms (23), mindestens eine Einrichtung zum Vergleich der gemessenen Temperatur (T) des Außenluftstroms (23) mit einer vordefiniertem Temperaturschwelle (S) enthält,
**dadurch gekennzeichnet, dass** das System enthält:
- mindestens eine Einrichtung zur Messung des Feuchtigkeitsgehalts (h) des Außenluftstroms (23),
- mindestens eine Einrichtung zum Vergleich des gemessenen Feuchtigkeitsgehalts (h) des Außenluftstroms (23) mit einer oberen Feuchtigkeitsschwelle (S2), und
- eine Regelungseinheit (31) der Geschwindigkeit des Außenluftstroms (23) abhängig vom gemessenen Feuchtigkeitsgehalt, konfiguriert zur:
• Verringerung der Geschwindigkeit des den externen Wärmetauscher (9) durchquerenden Außenluftstroms (23), wenn die gemessene Temperatur (T) des Außenluftstroms (23) niedriger als die oder gleich der vordefinierten Temperaturschwelle (S) und der Feuchtigkeitsgehalt (h) des Außenluftstroms (23) höher als die obere Feuchtigkeitsschwelle (S2) ist, und
• Erhöhung der Geschwindigkeit des den externen Wärmetauscher (9) durchquerenden Außenluftstroms (23), wenn die gemessene Temperatur (T) des Außenluftstroms (23) niedriger als die oder gleich der vordefinierten Temperaturschwelle (S) und der Feuchtigkeitsgehalt (h) des Außenluftstrom (23) niedriger als die oder gleich der oberen Feuchtigkeitsschwelle (S2) ist.

10. System nach Anspruch 9, wobei der Kühlfluidkreislauf (1) in Reihe mindestens einen Kompressor, einen internen Wärmetauscher (7) für einen Wärmeaustausch zwischen dem Kühlfluid und einem für den Innenraum bestimmten Luftstrom (17) und den externen Wärmetauscher (9) enthält.

11. System nach einem der Ansprüche 9 oder 10, das eine Erfassungseinrichtung (29) von eine Vereisung verursachenden Bedingungen enthält, die mindestens eine Verarbeitungseinrichtung enthält, um:
- zu ermitteln, ob die Temperatur des Kühlfluids niedriger ist als die Temperatur des Außenluftstroms (23),
- die Temperatur des Außenluftstroms (23) mit einer Temperaturschwelle (S) zu vergleichen,
- den Feuchtigkeitsgehalt des Außenluftstroms zu messen,
- den Feuchtigkeitsgehalt des Außenluftstroms mit einer unteren Feuchtigkeitsschwelle zu vergleichen, die niedriger ist als die obere Feuchtigkeitsschwelle, und
- wenn die Temperatur des Kühlfluids niedriger ist als die Temperatur des Außenluftstroms (23), die niedriger ist als die Temperaturschwelle (S), und wenn der Feuchtigkeitsgehalt höher als die untere Feuchtigkeitsschwelle ist, eine Erfassung von eine Vereisung verursachenden Bedingungen zu erkennen.

12. System nach einem der Ansprüche 9 bis 11, wobei die Geschwindigkeitsregelungseinheit (31) enthält:
- mindestens eine Verarbeitungseinrichtung, um die Geschwindigkeit des Außenluftstroms (23) zu messen und die Geschwindigkeit des Fahrzeugs zu messen, die die Geschwindigkeit des Außenluftstroms (23) beeinflusst,
- mindestens ein Organ zur Regelung der Geschwindigkeit (24), und
- mindestens eine Steuereinrichtung des Geschwindigkeitsregelungsorgans (24) abhängig von der Geschwindigkeit des Fahrzeugs und der Geschwindigkeit des Außenluftstroms (23).

13. System nach Anspruch 12, wobei das Geschwindigkeitsregelungsorgan einen Ventilator (24) enthält, der stromaufwärts vor dem externen Wärmetauscher (9) in Strömungsrichtung des Außenluftstroms (23) angeordnet ist.

14. System nach einem der Ansprüche 12 oder 13, wobei das Geschwindigkeitsregelungsorgan Klappen enthält, die zwischen einer Öffnungsstellung, in der die beweglichen Klappen es dem Außenluftstrom erlauben, Öffnungen zu durchqueren, und einer Schließstellung beweglich sind, in der die Klappen dem Durchgang des Außenluftstroms (23) entgegenwirken.

## Claims

1. Method for slowing the icing of a thermal conditioning system for a motor vehicle, the thermal conditioning system comprising an external heat exchanger (9) able to have a flow of air (23) external to said vehicle pass through it for an exchange of heat between the external air flow (23) and a coolant circulating through the external heat exchanger (9), and
- the temperature (T) of the external air flow (23) is measured,
- the temperature (T) of the external air flow (23) is compared against a temperature threshold (S), and
**characterized in that** said method comprises the following steps:
- if the temperature (T) of the external air flow (23) is below or equal to the temperature threshold (S), the level of humidity (h) of the external air flow (23) is measured, and
- the speed of the external air flow (23) is regulated according to the level of humidity (h) measured:
• if the level of humidity (h) of the external air flow (23) is above an upper humidity threshold (S2), the speed of the external air flow (23) passing through the external heat exchanger (9) is reduced, and
• if the level of humidity (h) of the external air flow (23) is below or equal to the upper humidity threshold (S2), the speed of the external air flow (23) passing through the external heat exchanger (9) is increased.

2. Method according to Claim 1, comprising a preliminary step in which conditions that generate icing of the external heat exchanger (9) are detected.

3. Method according to Claim 2, in which the detection of conditions that generate icing comprises the following steps:
- determining whether the temperature of the refrigerant is below the measured temperature (T) of the external air flow (23),
- if the temperature of the refrigerant is below the temperature (T) of the external air flow (23), measuring the level of humidity (h) of the external air flow (23),
- comparing the level of humidity (h) of the external air flow (23) against a lower humidity threshold (S1) lower than the upper humidity threshold (S2), and
- determining whether the level of humidity (h) is above the lower humidity threshold (S1) in order to detect conditions that generate icing.

4. Method according to any one of the preceding claims, in which the speed of the external air flow (23) is regulated using a fan (24).

5. Method according to any one of the preceding claims, in which the conditioning system comprises openings and flaps capable of moving between an open position in which the mobile flaps allow the external air flow (23) to pass through the openings and a closed position in which the mobile flaps oppose the passage of the external air flow (23), **characterized in that** the mobile flaps are controlled in such a way as to regulate the speed of the external air flow (23).

6. Method according to any one of the preceding claims, in which the temperature threshold (S) is of the order of 0°C.

7. Method according to any one of the preceding claims, in which the upper humidity threshold (S2) is of the order of 90%.

8. Method according to any one of the preceding claims, in which the lower humidity threshold (S1) is of the order of 60%.

9. Thermal conditioning system for a motor vehicle comprising a refrigerant circuit (1) comprising an external heat exchanger (9) exchanging between an external air flow (23) and the refrigerant, and
- at least one means of measuring the temperature (T) of the external air flow (23),
- at least one means of comparing the measured temperature (T) of the external air flow (23) against a predefined temperature threshold (S), **characterized in that** said system comprises:
- at least one means of measuring the level of humidity (h) of the external air flow (23),
- at least one means of comparing the measured level of humidity (h) of the external air flow (23) against an upper humidity threshold (S2), and
- a unit (31) for regulating the speed of the external air flow (23) according to the measured level of humidity and configured to:
• reduce the speed of the external air flow (23) passing through the external heat exchanger (9) when the measured temperature (T) of the external air flow (23) is below or equal to the predefined temperature threshold (S) and the level of humidity (h) of the external air flow (23) is above the upper humidity threshold (S2), and
• increase the speed of the external air flow (23) passing through the external heat exchanger (9) when the measured temperature (T) of the external air flow (23) is below or equal to the predefined temperature threshold (S) and the level of humidity (h) of the external air flow (23) is below or equal to the upper humidity threshold (S2).

10. System according to Claim 9, in which the refrigerant circuit (1) comprises, in series, at least one compressor, one internal heat exchanger (7) for an exchange of heat between the refrigerant and an air flow (17) intended for the vehicle interior, and the external heat exchanger (9).

11. System according to either of Claims 9 and 10, comprising a means (29) of detecting conditions that generate icing and comprising at least one processing means for:
- determining whether the temperature of the refrigerant is below the temperature of the external air flow (23),
- comparing the temperature of the external air flow (23) against a temperature threshold (S),
- measuring the level of humidity of the external air flow,
- comparing the level of humidity of the external air flow against a lower humidity threshold lower than the upper humidity threshold, and
- if the temperature of the refrigerant is below the temperature of the external air flow (23) below the temperature threshold (S) and if the level of humidity is above the lower humidity threshold, identifying that conditions that generate icing have been detected.

12. System according to any one of Claims 9 to 11, in which the speed regulating unit (31) comprises:
- at least one processing means for measuring the speed of the external air flow (23) and measuring the speed of said vehicle which influences the speed of the external air flow (23),
- at least one speed regulating member (24), and
- at least one means for controlling the speed regulating member (24) according to the speed of said vehicle and to the speed of the external air flow (23).

13. System according to Claim 12, in which the speed regulating member comprises a fan (24) positioned upstream of the external heat exchanger (9) in the direction in which the external air flow (23) blows.

14. System according to either of Claims 12 and 13, in which the speed regulating member comprises flaps able to move between an open position in which the mobile flaps allow the external air flow to pass through the openings and a closed position in which the mobile flaps oppose the passage of the external air flow (23).
